# FASCICULE DE BREVET EUROPEEN

(11) **EP 0 586 287 B1**
(45) Date de publication et mention de la délivrance du brevet: **05.03.1997**
(21) Numéro de dépôt: 93402097.5
(22) Date de dépôt: 25.08.1993
(51) Int. Cl.: F02P 15/00, F02P 9/00, F02P 3/08, F02C 7/266, F02P 17/00

(54) **Générateur d'allumage haute énergie notamment pour turbine à gaz**
Hochenergiezündgenerator insbesondere für eine Gasturbine
High energy ignition generator especially for a gas turbine

(30) Priorité: 04.09.1992 FR 9210603
(43) Date de publication de la demande: 09.03.1994
(73) Titulaire: EYQUEM, F-92002 Nanterre Cédex (FR)
(72) Inventeur: Balland, Patrick Guy André, F-92500 Rueil Malmaison (FR)
(74) Mandataire: Fort, Jacques

(56) Documents cités:
- EP-A- 0 463 800
- DE-A- 1 808 737
- FR-A- 1 493 392
- FR-A- 2 636 678
- PATENT ABSTRACTS OF JAPAN vol. 15, no. 155 (M-1104)18 Avril 1991 & JP-A-30 026 872

## Description

La présente invention concerne un générateur d'allumage haute énergie notamment pour turbine à gaz.

On connait déjà dans l'état de la technique un certain nombre de générateurs de ce type, comportant une source d'énergie raccordée à des moyens de génération d'étincelles entre les électrodes d'une bougie d'allumage, par exemple à basse tension et à entrefer à semi-conducteur.

De façon typique, ces moyens de génération comprennent un circuit comportant un condensateur de stockage d'énergie et une inductance en série avec la bougie d'allumage, une diode de roue libre connectée en parallèle aux bornes de l'inductance et de la bougie et des moyens de court-circuitage de ce circuit, de manière à engendrer des étincelles entre les électrodes de la bougie.

Ces moyens de court-circuitage peuvent être constitués par un éclateur formé par exemple par un tube à gaz, qui joue le rôle de commutateur de puissance et de référence de tension.

Cependant, ces moyens de court-circuitage peuvent également être constitués par des organes commutateurs à semi-conducteur commandés par des moyens de comparaison de la tension aux bornes du condensateur de stockage à une tension de référence.

Pour de plus amples renseignements concernant la structure et le fonctionnement de ce type de générateurs, on pourra par exemple se reporter au document FR-A-2 636 678 au nom de LABO INDUSTRIE.

Cependant, les générateurs de ce type présentent un certain nombre d'inconvénients au niveau de l'énergie transmise à la bougie en cas de raté à l'allumage de l'étincelle entre les électrodes de celle-ci.

En effet, en cas de raté à l'allumage d'une étincelle, pour une raison quelconque, telle qu'une usure de la bougie, toute l'énergie stockée dans les moyens de génération est transmise à la bougie, et en particulier au semi-conducteur de celle-ci, ce qui provoque une dégradation supplémentaire plus ou moins importante de ce semi-conducteur et une usure prématurée de la bougie.

Le document DE-A-1 808 737 décrit un dispositif d'allumage par étincelles qui comporte deux parties de circuit adaptées pour provoquer l'apparition de deux étincelles successives entre les électrode de la bougie afin de garantir un allumage.

Cependant, ce dispositif présente également les inconvénients mentionnés précédemment de dégradation de la bougie en cas de raté à l'allumage d'une étincelle.

Le but de l'invention est donc de résoudre ces problèmes en proposant un générateur d'allumage qui soit simple, fiable et qui permette de limiter la dégradation de cette bougie en cas de raté à l'allumage de l'étincelle et d'améliorer la qualité de celle-ci.

A cet effet, l'invention a pour objet un générateur d'allumage haute énergie d'un combustible notamment pour turbine à gaz, du type comportant une source d'énergie reliée à des moyens de génération d'étincelles entre les électrodes d'une bougie d'allumage, ces moyens de génération comprenant une première (2) et une seconde (3) partie et des moyens de contrôle du fonctionnement de la seconde partie de ces moyens de génération, reliés à des moyens de détection de l'allumage ou non de l'étincelle entre les électrodes de la bougie pour ne valider le fonctionnement de cette seconde partie qu'en cas d'allumage de l'étincelle, caractérisé en ce que la première partie des moyens de génération est à énergie faible, suffisante pour initier l'allumage d'une étincelle entre les électrodes de la bougie et la seconde partie est à énergie élevée pour transmettre à ladite étincelle une énergie suffisante pour l'allumage du combustible.

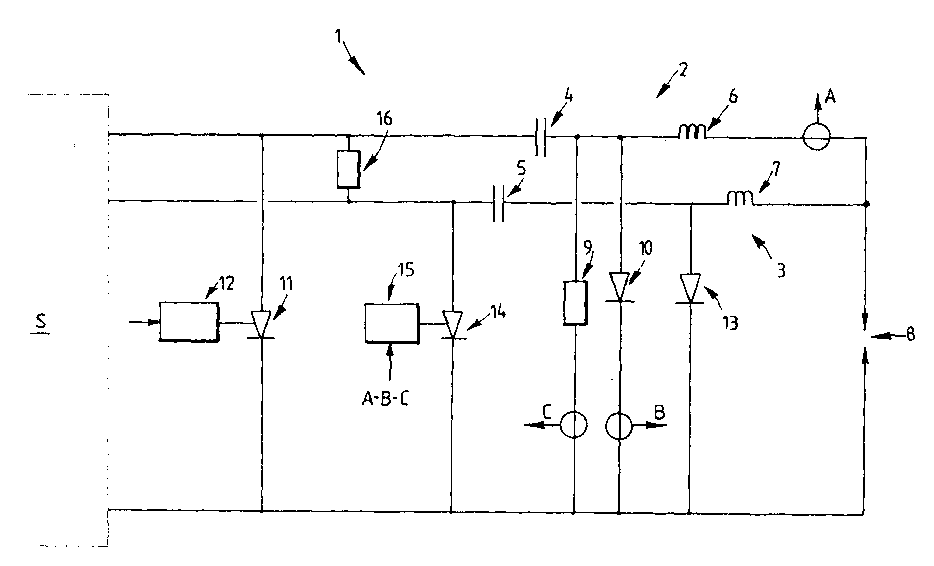

L'invention sera mieux comprise à l'aide de la description qui va suivre, donnée uniquement à titre d'exemple et faite en se référant au dessin annexé qui représente un schéma synoptique illustrant le fonctionnement d'un générateur selon l'invention.

Ainsi qu'on l'a indiqué précédemment, on pourra se reporter au document FR-A-2 636 678 pour une description complète de la structure et du fonctionnement d'un exemple de réalisation d'un générateur d'allumage haute énergie auquel peut s'appliquer la présente invention.

On sait que de façon typique, un tel générateur comporte une source d'énergie reliée à des moyens de génération d'étincelles entre les électrodes d'une bougie d'allumage.

Dans le document précité, les moyens de génération d'étincelles comprennent un circuit comportant un condensateur de stockage d'énergie et une inductance connectés en série avec la bougie d'allumage.

Une diode de roue libre et une résistance de décharge sont connectées en parallèle aux bornes de l'inductance et de la bougie.

Enfin, des moyens de court-circuitage, constitués dans ce document par des organes commutateurs à semiconducteur, sont connectés en parallèle aux bornes de ce circuit pour provoquer, par court-circuitage de ce circuit, la génération d'étincelles entre les électrodes de la bougie.

Une telle structure présente les différents inconvénients mentionnés précédemment à propos de la dégradation de la bougie en cas de raté à l'allumage d'une étincelle.

Pour résoudre ces problèmes, dans le générateur selon l'invention, les moyens de génération comprennent deux parties, une première à énergie faible, d'allumage de l'étincelle entre les électrodes de la bougie et une seconde à énergie élevée, de caractérisation de l'énergie de l'étincelle et des moyens de contrôle du fonctionnement de la seconde partie de ces moyens de génération, reliés à des moyens de détection de l'allumage ou non d'une étincelle entre les électrodes de la bougie pour ne valider le fonctionnement de cette seconde partie de ces moyens de génération, qu'en cas d'allumage d'une étincelle.

Le principe de fonctionnement du générateur selon l'invention est basé sur la constatation du fait que l'allumage d'une étincelle peut être obtenu avec une énergie faible, indépendamment de l'énergie qui est nécessaire pour l'allumage du combustible, c'est à dire de l'énergie de cette étincelle proprement dite.

Il est alors possible de distinguer la phase d'initiation d'allumage d'une étincelle et la phase de transmission de l'énergie nécessaire pour l'allumage du combustible.

Chaque partie des moyens de génération peut alors comporter les différents éléments mentionnés précédemment, à savoir un condensateur de stockage d'énergie, une inductance, une diode de roue libre, une résistance de décharge et des moyens de court-circuitage, par exemple à semi-conducteur.

Cependant, le dimensionnement des éléments de chaque partie de ces moyens de génération est adapté à la fonction d'allumage ou de caractérisation de l'énergie de l'étincelle, remplie par chaque partie.

C'est ainsi par exemple que la première partie d'allumage des étincelles peut comporter un condensateur de faible capacité, permettant de limiter l'énergie transmise à la bougie lors de l'allumage, ce qui réduit la dégradation de cette bougie en cas de raté à l'allumage d'une étincelle et le courant dans les moyens de court-circuitage, ce qui présente un avantage important lorsque ceux-ci sont à semi-conducteur.

Par ailleurs, l'inductance de cette partie des moyens de génération peut également présenter une valeur faible pour favoriser l'allumage de l'étincelle.

Les éléments de l'autre partie de ces moyens de génération peuvent présenter des valeurs classiques permettant de caractériser l'énergie de l'étincelle de façon connue dans l'état de la technique.

Si l'on se reporte au dessin annexé, on peut en effet constater que les moyens de génération désignés par la référence générale 1 sur cette figure, sont reliés à une source d'énergie S et comportent deux parties en parallèle désignées par les références générales 2 et 3.

Chaque partie comprend un condensateur de stockage d'énergie 4,5 et une inductance 6,7, en série. Ces deux parties en parallèle sont connectées à une électrode d'une bougie d'allumage 8.

La première partie 2 de ces moyens comporte une résistance de décharge 9 et une diode de roue libre 10 connectées en parallèle entre le point milieu entre le condensateur de stockage d'énergie 4 et l'inductance 6 et l'autre électrode de la bougie d'allumage.

Par ailleurs, cette partie 2 comporte également des moyens de court-circuitage désignés par la référence générale 11 sur cette figure, et constitués par exemple par un ensemble d'organes commutateurs à semi-conducteur, pour assurer le court-circuitage de cette première partie sous le contrôle de moyens de commande 12 recevant un signal de déclenchement.

Ce signal est par exemple délivré par des moyens de comparaison de la tension aux bornes du condensateur 4 à une valeur de référence.

On se reportera au document précité pour une description d'un exemple de réalisation de moyens permettant d'engendrer un tel signal.

La seconde partie de ces moyens de génération comporte également une diode de roue libre 13 connectée entre le point milieu entre condensateur de stockage d'énergie 5 et l'inductance 7 et l'autre borne de la bougie d'allumage 8.

Cette seconde partie de ces moyens comporte également des moyens de court-circuitage désignés par la référence générale 14, constitués également par exemple par des organes commutateurs à semi-conducteur, dont le fonctionnement est déclenché par des moyens de commande 15 reliés à des moyens de détection de l'allumage ou non d'une étincelle entre les électrodes de la bougie, pour ne valider le fonctionnement de cette seconde partie des moyens de génération qu'en cas d'allumage d'une étincelle entre les électrodes de la bougie et donc n'appliquer une énergie élevée de caractérisation entre les électrodes de celle-ci, que lorsque l'étincelle est allumée, afin de ne pas dégrader la bougie en cas de non allumage de l'étincelle.

Les moyens de détection de l'allumage ou non de l'étincelle peuvent être constitués par des moyens classiques de mesure du courant circulant dans la branche contenant le condensateur 4 et l'inductance 6 de la première partie de ces moyens par exemple en A.

On sait en effet que si un courant donné circule à ce niveau, l'étincelle est allumée entre les électrodes de la bougie.

Cette détection peut également être réalisée par mesure du courant de retour circulant en B dans la diode de roue libre 10 de la première partie des moyens de génération. En effet, un courant de retour circule dans cette diode de roue libre lorsque l'étincelle est allumée.

Enfin, selon un autre mode de réalisation, cette détection peut également être réalisée par la détection en C de la circulation d'un courant donné dans la résistance de décharge 9 de cette première partie.

On sait en effet que lorsqu'une étincelle est allumée entre les électrodes de la bougie, aucun courant ne circule dans cette résistance de décharge.

Si un courant circule dans cette résistance de décharge, il est donc possible de conclure que l'étincelle n'est pas allumée, pour inhiber le déclenchement de cette seconde partie des moyens de génération afin de ne pas envoyer d'énergie correspondante à la bougie.

Bien entendu, d'autres modes de réalisation de ces moyens de détection de l'allumage ou non de l'étincelle entre les électrodes de la bougie peuvent être envisagés.

Cependant, dans tous les cas, ces moyens de détection délivrent une information de validation ou d'inhibition des moyens de commande 15 des moyens de court-circuitage 14 de la seconde partie des moyens de génération, afin de valider ou d'inhiber le fonctionnement de ceux-ci pour transmettre ou non une énergie de caractérisation d'étincelle à la bougie, selon qu'une étincelle est déjà allumée entre les électrodes de la bougie ou non.

On notera également que cette seconde partie des moyens de génération comporte une résistance de décharge 16 connectée entre les bornes de connexion des moyens de court-circuitage 11 et 14 des deux parties de ces moyens, aux condensateurs correspondants, cette résistance de décharge permettant au condensateur de stockage 5 de la seconde partie de se décharger dans la première partie, afin de ne pas maintenir une pleine tension aux bornes des moyens de court-circuitage en cas de raté à l'allumage d'une étincelle.

On sait en effet que des organes commutateurs à semi-conducteur tels que des thyristors supportent relativement mal une pleine tension lorsqu'ils sont portés à haute température comme c'est le cas dans le type d'applications envisagées.

Cette résistance de décharge permet donc de limiter l'application de cette pleine tension et de réduire l'échauffement de ces organes.

On conçoit donc que le fonctionnement du générateur selon l'invention comporte plusieurs étapes, à savoir:
- le déclenchement de l'allumage d'une étincelle entre les électrodes de la bougie par déclenchement des moyens de court-circuitage de la première partie à énergie faible des moyens de génération; et
- en cas d'allumage de cette étincelle, le déclenchement des moyens de court-circuitage de la seconde partie à énergie élevée des moyens de génération pour caractériser cette étincelle, par transmission d'une énergie élevée de façon classique.

Cette séparation des fonctions permet une séparation des moyens correspondants, ce qui permet d'optimiser leur dimensionnement afin d'améliorer la qualité de l'étincelle.

## Revendications

1. Générateur d'allumage haute énergie d'un combustible, notamment pour turbine à gaz, du type comportant une source d'énergie (S) reliée à des moyens (1) de génération d'étincelles entre les électrodes d'une bougie d'allumage (8), ces moyens de génération comprenant une première (2) et une seconde (3) partie et des moyens (15) de contrôle du fonctionnement de la seconde partie de ces moyens de génération, reliés à des moyens (A;B;C) de détection de l'allumage ou non de l'étincelle entre les électrodes de la bougie (8) pour ne valider le fonctionnement de cette seconde partie qu'en cas d'allumage de l'étincelle, caractérisé en ce que la première partie des moyens de génération est à énergie faible, suffisante pour initier l'allumage d'une étincelle entre les électrodes de la bougie et la seconde partie est à énergie élevée pour transmettrer à ladite étincelle une énergie suffisante pour l'allumage du combustible.

2. Générateur selon la revendication 1, caractérisé en ce que chaque partie des moyens de génération d'étincelles comporte un circuit comprenant un condensateur de stockage d'énergie (4,5) et une inductance (6,7) en série, ces circuits étant connectés en parallèle et reliés à une électrode de la bougie d'allumage (8), une diode de roue libre (10,13), une résistance de décharge (9,16) et des moyens de court-circuitage (11,14) de ce circuit.

3. Générateur selon la revendication 2, caractérisé en ce que la résistance de décharge (16) de la seconde partie des moyens de génération est connectée à la première partie de ceux-ci pour assurer la décharge du condensateur de cette seconde partie, dans la première partie, en cas de raté à l'allumage de l'étincelle.

4. Générateur selon l'une quelconque des revendications précédentes, caractérisé en ce que les moyens de détection de l'allumage ou non de l'étincelle entre les électrodes de la bougie (8) comprennent des moyens de mesure du courant circulant (en A ) dans la branche contenant le condensateur et l'inductance de la première partie (2) des moyens de génération, pour valider le fonctionnement de la seconde partie.

5. Générateur selon l'une quelconque des revendications 1 à 3, caractérisé en ce que les moyens de détection de l'allumage ou non de l'étincelle entre les électrodes de la bougie (8), comprennent des moyens de mesure du courant circulant (en B) dans la diode de roue libre (10) de la première partie des moyens de génération, pour valider le fonctionnement de la seconde partie.

6. Générateur selon l'une quelconque des revendications 1 à 3, caractérisé en ce que les moyens de détection de l'allumage ou non de l'étincelle entre les électrodes de la bougie (8), comprennent des moyens de mesure du courant circulant (en C) dans la résistance de décharge (9) de la première partie des moyens de génération pour inhiber le fonctionnement de la seconde partie.

## Patentansprüche

1. Hochenergiezündgenerator für einen Brennstoff, insbesondere für eine Gasturbine mit einer Energiequelle (S), die mit Mitteln (1) zur Erzeugung von Zündfunken zwischen den Elektroden einer Zündkerze (8) verbunden ist, wobei diese Erzeugungsmittel einen ersten (2) und einen zweiten (3) Teil und Mittel (15) zur Kontrolle der Funktion des zweiten Teiles dieser Erzeugungsmittel aufweist verbunden mit Mitteln (A;B; C) zur Wahrnehmung einer Zündung oder keines Funkens zwischen den Elektroden der Kerze (8), um das Funktionieren dieses zweiten Teiles im Falle eines Zündfunkens nicht zu validieren,
dadurch gekennzeichnet,
daß der erste Teil der Erzeugungsmittel gering energetisch ausgebildet ist ausreichend, um einen Zündfunken zwischen den Elektroden der Kerze zu initiieren und der zweite Teil erhöht energetisch ausgebildet ist zur Übermittlung einer Energie an die Funken, die ausreichend zur Zündung des Brennstoffes ist.

2. Generator nach Anspruch 1,
dadurch gekennzeichnet,
daß jeder Teil der Zündfunkenerzeugungsmittel einen Kreis aufweist, der einen Kondensator zur Ladung von Energie (4,5) und in Reihe eine Induktivität (6,7), wobei diese Kreise parallel miteinander verbunden sind und mit einer Elektrode der Zündkerze (8) in Verbindung stehen, aufweist und eine Freilaufdiode (10,13), einen Entladungswiderstand (9,16) und Kurzschlußmittel (11,14) dieses Kreises.

3. Generator nach Anspruch 2,
dadurch gekennzeichnet,
daß der Entladungswiderstand (16) des zweiten Teiles der Generationsmittel verbunden ist mit dem ersten Teil von diesem, um die Entladung des Kondensators dieses zweiten Teiles sicherzustellen, in dem ersten Teil im Falle des Versagens der Zündung des Zündfunkens.

4. Generator nach einem der vorangehenden Ansprüche,
dadurch gekennzeichnet,
daß die Mittel zur Erfassung der Zündung oder des nicht erzeugten Funkens zwischen den Elektroden der Zündkerze (8) Mittel zur Messung des fließenden Stromes (in A) in dem Ast, der den Kondensator und die Induktivität des ersten Teiles (2) der Generationsmittel enthält, aufweisen zur Validierung der Funktion des zweiten Teiles.

5. Generator nach einem der Ansprüche 1 bis 3,
dadurch gekennzeichnet,
daß die Mittel zur Erfassung der Zündung oder des nicht erzeugten Funkens zwischen den Elektroden der Zündkerze (8) Mittel zur Messung des fließenden Stromes (in B) in der Freilaufdiode (10) des ersten Teiles der Generationsmittel aufweisen zur Validierung des Funktionierens des zweiten Teiles.

6. Generator nach einem der Ansprüche 1 bis 3,
dadurch gekennzeichnet,
daß die Mittel zur Erfassung der Zündung oder des nicht erzeugten Funkens zwischen den Elektroden der Zündkerze (8) Mittel zur Messung des fließenden Stromes (in C) in dem Entladungswiderstand (9) des ersten Teiles der Generationsmittel aufweisen zur Hemmung der Funktion des zweiten Teiles.

## Claims

1. A high-energy ignition generator for a fuel, inter alia for a gas turbine, of the kind comprising a source of energy (S) connected to means (1) for generating sparks between the electrodes of an ignition plug (8), the generating means comprising a first part (2) and a second part (3), and means (15) for monitoring the operation of the second part of the generating means, the monitoring means being connected to means (A; B; C) for detecting ignition or non-ignition of the spark between the electrodes of the plug (8) so as to enable the second part to operate only if the spark ignites, characterised in that the first part of the generating means has low energy, sufficient to initiate ignition of a spark between the electrodes of the plug and the second part has high energy in order to transmit to said spark sufficient energy for ignition of the fuel.

2. A generator according to claim 1, characterised in that each part of the spark generating means comprises a circuit comprising an energy-storing capacitor (4, 5) and an inductor (6, 7) in series, the circuits being connected in parallel and connected to an electrode of the ignition plug (8), a freewheel diode (10, 13), a discharge resistor (9, 16) and means (11, 14) for short-circuiting this circuit.

3. A generator according to claim 2, characterised in that the discharge resistor (16) in the second part of the generating means is connected to the first part thereof in order to discharge the capacitor from the second part into the first part if the spark fails to ignite.

4. A generator according to any of the preceding claims, characterised in that the means for detecting ignition or non-ignition of the spark between the electrodes of the plug (8) comprise means for measuring the current flowing (at A) in the branch containing the capacitor and the inductor in the first part (2) of the generating means, in order to enable the second part to operate.

5. A generator according to any of claims 1 to 3, characterised in that the means for detecting ignition or non-ignition of the spark between the electrodes of the plug (8) comprise means for measuring the current flowing (at B) in the freewheel diode (10) in the first part (2) of the generating means, in order to enable the second part to operate.

6. A generator according to any of claims 1 to 3, characterised in that the means for detecting ignition or non-ignition of the spark between the electrodes of the plug (8) comprise means for measuring the current flowing (at C) in the discharge resistor (9) of the second part of the generating means in order to inhibit operation of the second part.
